(19) Europäisches Patentamt
European Patent Office
Office européen des brevets

(11) EP 4 621 644 A1

(12) **DEMANDE DE BREVET EUROPEEN**

(43) Date de publication:
**24.09.2025 Bulletin 2025/39**

(21) Numéro de dépôt: **25161303.0**

(22) Date de dépôt: **03.03.2025**

(51) Classification Internationale des Brevets (IPC):
***G06N 3/044*** *(2023.01)* ***G08G 1/01*** *(2006.01)*

(52) Classification Coopérative des Brevets (CPC):
**G08G 1/0129; G06N 3/044; G06N 3/045; G06N 3/08; G08G 1/0104; G08G 1/0133; G08G 1/0145;** G06N 3/0442; G08G 1/0116

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **19.03.2024 FR 2402717**

(71) Demandeur: **IFP Energies nouvelles**
**92500 Rueil-Malmaison (FR)**

(72) Inventeurs:
- **HAMMOUMI, Adam**
  **92852 RUEIL-MALMAISON CEDEX (FR)**
- **DE NUNZIO, Giovanni**
  **92852 RUEIL-MALMAISON CEDEX (FR)**
- **OTHMAN, Bassel**
  **92852 RUEIL-MALMAISON CEDEX (FR)**
- **SABIRON, Guillaume**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

# (54) PROCÉDÉ DE DÉTERMINATION D'UN DÉBIT DE VEHICULES SUR UN RÉSEAU ROUTIER

(57) La présente invention concerne un procédé pour la détermination d'un débit de véhicules sur un brin routier d'un réseau routier. On construit un modèle pour déterminer un débit de véhicules sur un brin routier de la manière suivante: pour chaque brin routier d'un réseau routier d'apprentissage, on détermine une séquence ordonnée selon un sens de circulation comprenant des descripteurs statiques du brin routier d'apprentissage et de ces voisins ; on entraine un réseau de neurones à mémoire court et long terme sur les séquences ordonnées et on concatène le résultat avec des descripteurs dynamiques des brins routiers d'apprentissage ; on entraine un réseau de neurones transformeur sur ces concaténations. Puis on détermine le débit de véhicules sur un brin routier d'un réseau routier d'intérêt en appliquant le modèle construit à des descripteurs statiques et dynamiques du brin routier et à des descripteurs statiques des brins routiers voisins.

[Fig 1A]

D
H
MES
INV

[Fig 1B]

D
H
MES
INV

EP 4 621 644 A1



(Cont. page suivante)

[Fig 1C]

900
800
700
600
500
400
300
200
100
D
INV
MES
0
5
10
15
20
H

## Description

### Domaine technique

La présente invention concerne le domaine de la détermination d'informations relatives au trafic de véhicules pour un réseau routier. En particulier, l'invention concerne un procédé de détermination d'un débit de véhicules sur au moins une portion de route d'un réseau routier.

Aujourd'hui, les métropoles et les gestionnaires de route disposent d'outils de modélisation des déplacements pour planifier et simuler l'impact de mesures de régulation et de travaux futurs, afin de réduire la congestion ou d'améliorer la qualité de l'air. Cependant, ces modèles sont très difficiles à mettre en place (besoin de données d'enquête de population très coûteuses, besoin d'un effort conséquent de calibration), difficiles à maintenir (la maintenance étant déléguée aux bureaux d'études, il est donc difficile de faire évoluer l'outil rapidement), et difficiles à mettre à jour (les enquêtes de population sont menées tous les 5 à 10 ans).

Il existe donc un fort besoin de disposer d'outils de détermination des débits véhiculaires au sein d'un réseau de transport sans devoir utiliser en entrée des données trop coûteuses et difficiles à obtenir comme les enquêtes de mobilité, qui sont d'ailleurs statiques et pas adaptées à prédire les évolutions rapides de la mobilité, ou bien des données d'usage réel, comme par exemple les données « floating car data » (FCD pouvant être traduit par données de trajets réalisés et mesurés), qui sont dynamiques mais pas forcément disponibles sur l'ensemble des brins routier d'un réseau urbain. Par ailleurs, ces outils alternatifs devraient être simples d'utilisation par des non-experts, rapides d'exécution pour évaluer et comparer facilement plusieurs cas d'étude, et enfin fiables en reproduisant au mieux des données récentes de comptage sur le réseau routier considéré.

### Technique antérieure

La majorité des approches alternatives présentes dans la littérature requièrent une ou plusieurs mesures sur un brin routier donné pour pouvoir estimer le débit trafic correspondant. Leur précision dépend du taux de pénétration des mesures et de leurs disponibilités. Pour ces méthodes, il serait donc impossible d'estimer le débit sur un brin routier qui n'est pas couvert par ces mesures. Quelques documents proposent des extrapolations et des corrélations spatio-temporelles afin d'estimer des débits de véhicule sur un réseau routier même sans couverture complète des mesures. Ils requièrent une mise à jour continue des mesures et sont souvent lourds en temps de calculs et en besoin de mémoire informatique, avec des matrices qui augmentent exponentiellement avec le réseau routier. Leur exploitation sur un large réseau routier peut donc être limitée.

La prévision du débit véhiculaire est un sujet fondamental pour l'opération et la gestion en temps réel des systèmes de transport. L'application peut aller de la surveillance du réseau routier, à la détection d'incidents, ou encore au calcul des émissions et de la qualité de l'air. Un grand nombre d'études dans la littérature proposent l'estimation du débit de trafic à partir de mesures de boucles de comptage. Ils exploitent donc des historiques de séries temporelles afin de prédire le débit trafic sur un certain horizon temporel (extrapolations temporelles). Les modèles proposés pour résoudre cette problématique sont assez larges et varient de modèles statistiques autorégressifs à des modèles de « machine learning » (apprentissage automatique en français) de type réseaux de neurones, machine à vecteurs de support (SVM), ou des forêts aléatoires. Des approches de type « deep learning » (pouvant être traduit par apprentissage profond) ont aussi été explorées dans la littérature. Ces approches amènent souvent à une meilleure prise en compte des corrélations temporelles par rapport aux approches d'apprentissage automatique. Ces méthodes se limitent toutefois aux prévisions temporelles sans étudier forcément l'extrapolation spatiale. Il est donc impossible avec ces méthodes de prédire des débits sur des brins routiers ne disposant pas de mesures de débit.

D'autres méthodes ont proposé d'estimer le débit de trafic à partir d'autres capteurs. Une première méthode développée consiste en une estimation du débit de trafic routier à partir de données provenant de vidéos de surveillance. D'autres solutions concernent des approches statistiques et des approches d'apprentissage supervisé de type CNN (« Convolutional Neural Network » pouvant être traduit par réseau de neurones convolutif), GMM (« Gaussian Mixture Model » pouvant être traduit par modèle de mélange gaussien), ou des filtres de Kalman afin d'estimer le nombre et la direction des véhicules. D'autres méthodes se basent sur l'estimation du débit de trafic routier à partir de mesures de bruit provenant de balises acoustiques. L'approche consiste à extraire des caractéristiques du signal acoustique et à les corréler aux mesures de trafic routier avec des méthodes d'apprentissage supervisé. L'exploitation de la méthode requiert toutefois la présence continue d'un signal acoustique avec un capteur qui soit présent à côté d'un segment routier pour ne pas avoir de bruit de fond. Les données cellulaires ont aussi été exploitées dans la littérature pour l'estimation du débit de trafic. Ces types d'approches sont toutefois limités en précision, qui dépend du taux de pénétration des mesures et de leurs disponibilités. Aussi, il serait donc impossible d'estimer le débit de véhicules sur un brin routier qui n'est pas couvert par ces mesures.

D'autres auteurs ont proposé des méthodes d'estimation de débit routier à partir de données diverses et de capteurs présents sur un réseau routier. Certaines méthodes proposées exploitent des données FCD et des données de vidéos de surveillance et ou de mesure de boucles de comptage afin d'estimer le débit sur un réseau routier complet. Les approches peuvent aller d'apprentissages semi-supervisés de type graphe à des complétions de matrices géométriques et des filtres spatiaux temporelles. Ce type d'approche permet donc d'estimer le débit sur des brins routiers même sans mesure. Cela requiert, toutefois, une pénétration plus ou moins importante des mesures sur les brins routiers avec une mise à jour continue des mesures. Ces approches sont aussi souvent lourdes en temps de calcul avec des matrices qui croient exponentiellement avec la taille du le réseau routier. Leur exploitation sur un large réseau routier peut donc être limitée.

On connait aussi des techniques de fusion de données, visant à combiner différentes sources d'information, ce qui peut inclure des données de capteurs, des données de trafic historiques, des données météorologiques, etc. Enfin, les données de localisation des smartphones (ou téléphones intelligents pour utiliser le terme français les désignant) et des applications de navigation sont également exploitées pour estimer la densité de trafic et prédire les conditions de circulation.

La plupart des méthodes susmentionnées nécessitent au moins une mesure sur un brin de route spécifique pour estimer le flux de trafic associé. La précision de ces méthodes dépend étroitement du taux de pénétration des mesures disponibles et de leur disponibilité. Par conséquent, ces approches se révèlent incapables d'estimer le flux de trafic sur des brins non couverts par ces mesures (on parle par la suite d'extrapolation spatiale).

On connait toutefois le document CN111292534A qui concerne une méthode d'estimation de l'état du trafic pour les autoroutes urbaines, utilisant la classification k-means (« k-moyennes » en français), et l'apprentissage profond de séquences pour estimer les conditions de circulation sur l'ensemble du réseau autoroutier, même lorsque des données en temps réel ne sont pas disponibles pour certaines sections de route. La méthode implique la division du réseau autoroutier, la modélisation des données, le prétraitement des données, l'analyse par regroupement, et l'application d'un modèle d'apprentissage profond de séquences pour fournir des informations sur la circulation. Toutefois, cette méthode présente l'inconvénient d'être limitée aux brins autoroutiers qui forment un réseau de longues séquences qui se succèdent, contrairement aux brins urbains qui présentent des intersections et des bifurcations plus importantes et plus fréquentes.

On connait aussi le document CN111222491A, qui concerne un système d'évaluation du trafic basé sur l'apprentissage profond pour estimer le flux de trafic en utilisant des séquences d'images caractéristiques et des réseaux de neurones convolutifs. Le document vise à améliorer la détection du nombre de véhicules en se basant sur la projection orthographique de leur zone dans les images. Cette méthode concerne le traitement d'images obtenues via des cameras par apprentissage profond. Toutefois, cette méthode présente l'inconvénient d'être dépendante de la disponibilité d'images (via des caméras par exemple) du trafic pour pouvoir en déduire le flux. De plus, elle est limitée aux endroits où cette information est disponible, contrairement aux données SIG (Système d'information géographique) qui sont disponibles sur quasiment toute la planète et facilement accessibles.

On connait aussi le document JP2023082282A2, qui concerne une méthode d'estimation du temps de trajet, capable de prédire le temps de déplacement nécessaire pour un véhicule empruntant une autoroute vers un point prédéfini en utilisant des modèles de deep learning (apprentissage profond). Les modèles proposés estiment d'abord les variations du volume de trafic en amont dans une section continue de l'autoroute, et calculent ensuite le temps de trajet en fonction de ces prédictions, en utilisant également des informations de sortie pour améliorer la précision des prédictions. Cette méthode semble toutefois spécifique aux autoroutes. Par ailleurs, le flux de véhicules est calculé seulement en amont de la section de l'autoroute empruntée, et ce afin d'estimer un temps de trajet.

On connait en outre le document IN202041039998A, qui concerne un procédé de prédiction du débit routier, reposant sur des données massives pour générer des données de circulation à grande échelle et qui applique des algorithmes d'apprentissage automatique, de traitement d'images et de « deep learning » pour analyser ces données, offrant ainsi la possibilité de prédire le flux de circulation et de guider des véhicules autonomes pour une meilleure gestion du trafic en temps réel. Le document nécessite alors des données provenant en temps réel d'utilisateurs d'application mobile, qui sont alors analysées et combinées avec d'autres informations de capteurs de véhicules autonomes pour mieux les guider. Toutefois, cette méthode présente l'inconvénient de nécessiter des données en temps réel (provenant d'applications comme Google Maps ™ par exemple), en plus de données de type images/ou vidéos qui sont relevées par des véhicules autonomes.

On connait également le document CN101593424A qui concerne une méthode de prévision du flux du trafic à court terme et qui repose sur trois modules : un premier module de moyenne historique, qui divise les différentes dates d'une année en trois types différents (jours ouvrés, fériés, et week-end) et qui calcule respectivement les différents flux de trafic pour chaque type en se basant sur des données historiques du flux ; un deuxième module de réseau de neurones qui estime les flux de trafic grâce à la modélisation de données ; enfin, un troisième module qui prend en compte les différentes conditions de trafic et qui combine la sortie du module de moyenne historique et le module du réseau de neurones pour prévoir le flux de trafic à court terme. Ainsi, cette méthode permet la prédiction des débit futurs sur des brins routiers, à partir de mesures de débits disponibles sur les mêmes brins. En d'autres termes, cette méthode permet une extrapolation temporelle, mais ne permet pas une extrapolation spatiale.

On connait en outre le document EP22204301A1, qui concerne un procédé pour déterminer un débit de véhicules sur un brin routier, y compris pour un brin routier non équipé de capteur. Pour ce procédé, on réalise des mesures de débit, par au moins un capteur fixe, en au moins un point de mesure d'un réseau routier d'apprentissage. Et on construit, par apprentissage automatique, un modèle de débit de véhicules au moyen de données macroscopiques du réseau routier d'apprentissage et des mesures. Puis, on applique ce modèle au brin de réseau routier considéré. Ce procédé permet d'estimer rapidement (sans outils de simulation de trafic) le flux de trafic sur un vaste réseau routier en l'absence de mesures préalables. Toutefois, ce procédé ne permet pas d'assurer la continuité spatiale du débit prédit entre brins adjacents. Enfin, ce procédé n'est pas suffisamment précis, comme cela sera montré dans le deuxième exemple d'application ci-après.

La présente invention permet de pallier ces inconvénients. Notamment, la présente invention concerne un procédé pour estimer un débit de véhicules sur tout brin routier d'un réseau routier et à tout instant. Le procédé selon l'invention repose sur la combinaison de deux réseaux de neurones profonds, l'un prenant en compte des informations spatiales d'un réseau routier d'apprentissage, et l'autre prenant en compte des informations temporelles sur ce même réseau. De plus, dans l'invention, les informations spatiales prises en compte pour l'apprentissage profond concernent un brin routier et les brins adjacents, ce qui permet au réseau de neurones d'apprendre des corrélations spatiales entre les caractéristiques des brins et le débit routier associé. De manière générale, le procédé selon l'invention permet d'augmenter la précision des estimations de débit de véhicules, d'améliorer la continuité spatiale du débit prédit (notamment grâce à la prise en compte des brins routiers adjacents dans des « triplets » de brins), d'accélérer les calculs et de réduire l'occupation mémoire des modèles entrainés.

## Résumé de l'invention

La présente invention concerne un procédé pour la détermination d'un débit de véhicules sur au moins un brin routier d'un réseau routier, au moyen d'une base d'apprentissage comprenant, pour chaque brin routier d'apprentissage, une pluralité de brins routiers d'apprentissage d'un réseau routier d'apprentissage, au moins une mesure du débit de véhicules, au moins un descripteur statique, au moins un descripteur dynamique, ainsi qu'au moins un descripteur statique pour des brins routiers d'apprentissage dudit réseau routier d'apprentissage ayant un nœud en commun avec ledit brin routier d'apprentissage.

Le procédé selon l'invention comprend au moins les étapes suivantes :

A) On construit un modèle pour déterminer un débit de véhicules sur un brin routier d'un réseau routier à partir de descripteurs statiques et dynamiques dudit brin routier dudit réseau routier en appliquant au moins les sous-étapes suivantes :

> I) pour chaque brin routier d'apprentissage de ladite pluralité de brins routiers d'apprentissage, on détermine une séquence ordonnée de descripteurs statiques relative audit brin routier d'apprentissage fonction desdits descripteurs statiques dudit brin routier d'apprentissage et desdits descripteurs statiques ou d'une statistique desdits descripteurs statiques desdits brins routiers d'apprentissage ayant un nœud en commun avec ledit brin routier d'apprentissage, ladite séquence ordonnée de descripteurs statiques étant ordonnée selon un sens de circulation prédéfini desdits véhicules sur ledit brin routier d'apprentissage ;
> II) on entraine un réseau de neurones à mémoire court et long terme sur ladite pluralité de séquences ordonnées de descripteurs statiques relatives à ladite pluralité de brins routiers d'apprentissage ;
> III) pour chaque brin routier d'apprentissage de ladite pluralité de brins routiers d'apprentissage, on concatène un résultat dudit réseau de neurones à mémoire court et long terme pour ledit brin routier d'apprentissage avec lesdits descripteurs dynamiques dudit brin routier d'apprentissage ;
> IV) on entraine un réseau de neurones transformeur sur ladite pluralité de concaténations dudit résultat dudit réseau de neurones à mémoire court et long terme pour ledit brin routier d'apprentissage avec lesdits descripteurs dynamiques dudit brin routier d'apprentissage ;

B) on obtient au moins un descripteur statique et au moins un descripteur dynamique dudit brin routier dudit réseau routier, ainsi qu'au moins un descripteur statique pour des brins routiers ayant un nœud en commun avec ledit brin routier ;

C) au moyen dudit au moins un descripteur statique et dudit au moins un descripteur dynamique dudit brin routier dudit réseau routier, ainsi que dudit au moins un descripteur statique pour lesdits brins routiers ayant un nœud en commun avec ledit brin routier, et au moyen dudit modèle pour déterminer un débit de véhicules sur un brin routier d'un réseau routier en fonction de descripteurs statiques et dynamiques dudit brin dudit réseau routier, on détermine ledit débit de véhicules sur ledit brin routier dudit réseau routier.

Selon une mise en œuvre de l'invention, on peut construire ladite base d'apprentissage en réalisant au moins les sous-étapes suivantes pour chaque brin routier d'apprentissage de ladite pluralité de brins routiers d'apprentissage dudit réseau routier d'apprentissage :

i) On mesure au moins un débit de véhicules sur ledit brin routier d'apprentissage au moyen d'au moins un capteur fixe de mesure de trafic ;
ii) On obtient au moins un descripteur statique et au moins un descripteur dynamique dudit brin routier d'apprentissage, ainsi qu'un descripteur statique pour chacun desdits brins routier ayant un nœud commun avec ledit brin routier d'apprentissage.

Selon une mise en œuvre de l'invention, ledit capteur fixe de mesure de trafic peut être une boucle de comptage.

Selon une mise en œuvre de l'invention, lesdits descripteurs statiques dudit au moins un brin routier dudit réseau routier, respectivement desdits brins routiers d'apprentissage dudit réseau routier d'apprentissage, peuvent comprendre au moins un type, un nombre de voie, une longueur et une vitesse maximale dudit brin routier, respectivement desdits brins routiers d'apprentissage.

Selon une mise en œuvre de l'invention, lesdits descripteurs dynamiques dudit au moins un brin routier dudit réseau routier, respectivement desdits brins routiers d'apprentissage dudit réseau routier d'apprentissage, peuvent consister en une séquence des vitesses moyennes des véhicules pour chaque heure d'une journée sur ledit brin routier, respectivement sur lesdits brins routiers d'apprentissage.

Selon une mise en œuvre de l'invention, ladite statistique peut être une moyenne.

Selon une mise en œuvre de l'invention, pour ledit au moins un brin routier, respectivement pour chacun desdits brins routiers d'apprentissage dudit réseau routier d'apprentissage, on peut déterminer ladite séquence ordonnée de descripteurs statiques relative audit brin routier, respectivement audit brin routier d'apprentissage, en formant un vecteur S s'écrivant :

$$S = [\bar{Y}, x, \bar{Z}]$$

où le vecteur $x$ correspond auxdits descripteurs statiques dudit brin routier, respectivement dudit brin routier d'apprentissage, $\bar{Y}$ et $\bar{Z}$ sont des vecteurs de ladite statistique desdits descripteurs statiques desdits brins routiers, respectivement desdits brins routiers d'apprentissage, ayant un nœud en commun avec ledit brin routier, respectivement avec ledit brin routier d'apprentissage, et situés en amont et en aval dudit brin routier, respectivement dudit brin routier d'apprentissage, selon ledit sens de circulation prédéfini.

Selon une mise en œuvre de l'invention, pour ledit au moins un brin routier, respectivement pour chacun desdits brins routiers d'apprentissage, on peut concatèner ledit résultat dudit réseau de neurones à mémoire court et long terme pour ledit au moins un brin routier, respectivement pour ledit brin routier d'apprentissage, avec lesdits descripteurs dynamiques dudit au moins un brin routier, respectivement dudit brin routier d'apprentissage, de la manière suivante :

$$ST = [h, T]$$

où h est un vecteur correspondant à la sortie dudit réseau de neurones à mémoire court et long terme pour ledit au moins un brin routier, respectivement pour ledit au moins un brin routier d'apprentissage, $T$ est un vecteur desdits descripteurs dynamiques dudit au moins un brin routier, respectivement dudit brin routier d'apprentissage, sous la forme $T = (\tau_t : t \in \Gamma)$, où $\tau_t$ est un desdits descripteurs dynamiques dudit au moins un brin routier, respectivement dudit brin routier d'apprentissage, mesuré au temps au pas de temps t d'une période de mesure $\Gamma$.

Selon une mise en oeuvre de l'invention, on peut adapter des infrastructures dudit réseau routier en fonction dudit débit de véhicules déterminé pour ledit au moins un brin routier, et/ou on adapte des limitations de vitesse dudit réseau routier en fonction dudit débit de véhicules déterminé pour ledit au moins un brin routier, et/ou on affiche ledit débit de véhicules déterminé pour ledit au moins un brin routier et/ou on affiche une qualité de l'air estimée à partir dudit débit de véhicules déterminé pour ledit au moins un brin routier.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé tel que décrit ci-dessus, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1A (respectivement la Figure 1B et la figure 1C) présente une courbe représentative du débit mesuré en fonction de l'heure de la journée et une courbe représentative du débit en fonction de l'heure de la journée déterminé par le procédé selon l'invention pour un premier (respectivement un deuxième et un troisième) brin routier de la base de données de validation issue du réseau routier d'apprentissage.

La figure 2A présente une carte du débit estimé par le procédé selon l'invention sur les principaux axes de la ville de Lyon.

La figure 2B présente un agrandissement d'une partie de la zone urbaine de la carte de la figure 2A.

**Description des modes de réalisation**

La présente invention concerne un procédé pour la détermination d'un débit de véhicules sur au moins un brin d'un réseau routier, de préférence sur l'ensemble d'un réseau routier.

Autrement dit, la présente invention vise à dénombrer un nombre de véhicules par unité de temps qui passent par une portion de route.

Selon une mise en œuvre de l'invention, le débit de véhicules sur le brin routier considéré peut être par exemple un débit moyen ou un débit maximal par unité de temps, ou de manière plus générale toute statistique relative à un débit de véhicules (minimum, écart-type, médiane, etc.). Le débit maximal de véhicules traduit la capacité d'un brin routier. Il s'agit d'un paramètre physique qui dimensionne le brin routier.

Selon une mise en œuvre de l'invention, le débit de véhicules sur le brin routier considéré peut être un débit (par exemple moyen ou maximal) journalier, c'est-à-dire un débit de véhicules sur le brin routier considéré pendant une durée d'une journée. Cela peut permettre de prédire la variation du débit d'un jour à l'autre, notamment en raison du jour de la semaine, du mois, des jours fériés, des périodes de vacances scolaires, etc. Alternativement, le débit de véhicules sur le brin routier considéré peut être un débit (par exemple moyen ou maximal) horaire, c'est-à-dire un débit de véhicules sur le brin routier considéré pendant une durée d'une heure. Cela peut permettre de prédire la variation du débit au sein d'une journée, notamment en raison des horaires de travail, des horaires d'école, des horaires des loisirs, etc.

De manière générale, on appelle « réseau routier » un ensemble de routes et de chemins dans une zone géographique prédéfinie. Cette zone géographique prédéfinie peut être un quartier d'une ville, une ville, une communauté de communes, un département, etc. Un brin du réseau routier est une subdivision élémentaire du réseau routier entre deux nœuds consécutifs du réseau routier. Un nœud routier est une extrémité d'une portion de route pouvant correspondre à une intersection, un obstacle, un changement de signalisation routière, etc. Par exemple un brin du réseau routier peut être une route entre deux intersections consécutives, entre deux signalisations consécutives, entre une intersection et une signalisation, ou une partie d'autoroute entre deux sorties consécutives, etc. Ainsi, on dispose d'un découpage fin du réseau routier, et d'un modèle qui est adapté au réseau routier sans données microscopiques.

De manière classique mais non limitative, le réseau routier peut être représenté par un graphe, appelé graphe routier. Le graphe routier est composé d'un ensemble d'arêtes (appelés aussi arcs) et de nœuds, les nœuds pouvant représenter les intersections, et les arêtes les portions de routes entre les intersections. Le graphe routier peut être obtenu à partir d'un service en ligne (« webservice ») de cartographie, par exemple Here ™ (Here Apps LLC, Pays-Bas) qui fournit les arêtes du graphe sous forme d'objets géométriques purs. De préférence, le graphe routier est cohérent avec le réseau routier (toutes les connexions physiques entre deux routes, et uniquement celles-ci, sont représentées par les nœuds du graphe), aussi invariant que possible dans le temps. De plus, le graphe routier peut être simplifié, en ne prenant pas en compte les portions de routes telles que les impasses, les chemins dans les parcs ou les pistes cyclables, en fonction du type du véhicule considéré (par exemple pour le mode de réalisation des véhicules automobiles, les pistes cyclables peuvent ne pas être prises en compte).

Le procédé selon l'invention peut être mis en œuvre pour tout type de véhicules : bicyclette, véhicule automobile, deux-roues motorisé, bateau, aéroglisseur, trottinette, etc. ainsi que les déplacements piétons. Toutefois, le procédé selon l'invention est particulièrement adapté aux véhicules motorisés, tels que les véhicules automobiles, poids lourds, bus, deux-roues motorisés, etc.

Le procédé selon l'invention requiert des mesures obtenues par un capteur de trafic routier fixe. Chaque capteur de trafic routier fixe est disposé sur un point (appelé point de mesure) d'un réseau routier (en l'espèce un réseau routier d'apprentissage). Chaque capteur fixe permet des mesures ponctuelles (spatialement) et temporelles du nombre de passages de véhicules (débit de véhicules) et éventuellement de la vitesse de passage des véhicules (vitesse de trafic). Les positions des points de mesure sont identifiées au sein du réseau routier. Selon un mode de réalisation de l'invention, les capteurs de trafic routier fixes peuvent être des caméras, des radars, des boucles inductives, des cellules photoélectriques sensibles détectant la rupture d'un rayon lumineux, des câbles piézo-électriques mesurant la pression exercée sur la chaussée ou tous capteurs analogues.

Selon une mise en œuvre préférée de l'invention, le capteur de trafic routier fixe correspond à une boucle inductive, encore appelée boucle de comptage. Il existe en effet des bases de données en accès libre de mesures de débits routiers réalisées par de boucles de comptage. La mise en œuvre du procédé selon l'invention en est ainsi simplifiée.

Le procédé de détermination du débit de véhicules selon l'invention peut mettre en œuvre les étapes suivantes :

1) Construction de la base d'apprentissage

1.1) Mesures du débit de véhicules sur un réseau routier d'apprentissage

1.2) Obtention de descripteurs statiques et dynamiques d'une pluralité de brins routiers du réseau routier d'apprentissage

2) Construction d'un modèle pour déterminer un débit de véhicules sur un brin d'un réseau routier au moyen de la base d'apprentissage

2.1) Détermination d'une pluralité de séquences de descripteurs statiques ordonnées

2.2) Entrainement d'un réseau de neurones LSTM sur la pluralité de séquences ordonnées de descripteurs statiques

2.3) Concaténation du résultat du réseau de neurones LSTM avec les descripteurs dynamiques

2.4) Entrainement d'un réseau de neurones Transformer sur la concaténation du résultat du réseau de neurones LSTM avec les descripteurs dynamiques

3) Détermination du débit de véhicules sur un brin d'un réseau routier au moyen du modèle pour déterminer un débit de véhicules sur un brin d'un réseau routier construit

3.1) Obtention de descripteurs statiques et dynamiques du au moins un brin routier du réseau routier

3.2) Détermination de séquences de descripteurs statiques ordonnées 3.3) Application du réseau de neurones LSTM entrainé

3.4) Concaténation du résultat du réseau de neurones LSTM avec les descripteurs dynamiques

3.5) Application du réseau de neurones Transformer entrainé sur la concaténation du résultat du réseau de neurones LSTM avec les descripteurs dynamiques

Les étapes 1) et 2) peuvent être réalisées qu'une seule fois, et au préalable (mode « offline »). Autrement dit, une fois le modèle pour déterminer un débit de véhicules sur un brin d'un réseau routier construit au moyen de la base d'apprentissage, on peut appliquer ce modèle une ou plusieurs fois. Par exemple, si l'on souhaite déterminer le débit véhiculaire de plusieurs brins d'un réseau routier ou le débit véhiculaire d'un même brin routier mais pour différents instants, on peut répéter uniquement l'étape 3 du procédé selon l'invention.

Avantageusement, on peut mettre à jour de manière régulière (par exemple tous les mois et au moins tous les ans) la base d'apprentissage, et de manière générale dès que de nouvelles données sont disponibles, puis mettre à jour le modèle pour déterminer un débit de véhicules sur un brin d'un réseau routier, en entrainant ce modèle sur la base d'apprentissage enrichie.

Au moins l'étape 2) et/ou l'étape 3) peuvent être mises en œuvre par des moyens informatiques, notamment un ordinateur, un processeur ou un calculateur.

Dans la suite de la demande, le réseau routier auquel on applique l'étape 3) est appelé « réseau routier considéré » ou encore « réseau routier de prédiction », ou encore « réseau routier d'inférence ». Il pourrait être également appelé « deuxième réseau routier ». Il s'agit du réseau routier pour lequel on souhaite déterminer le débit de véhicules. Ces notations permettent de le distinguer du « réseau routier d'apprentissage », ou encore du « premier réseau routier », qui sert pour la construction de la base d'apprentissage. Le « réseau routier considéré » peut correspondre ou peut inclure le « réseau routier d'apprentissage », ou être un réseau routier différent du « réseau routier d'apprentissage ».

Les étapes du procédé selon l'invention sont détaillées ci-après.

**1) Construction de la base d'apprentissage**

Au cours de cette étape, il s'agit de construire une base d'apprentissage pour entrainer le modèle pour déterminer un débit de véhicules sur au moins un brin d'un réseau routier.

Cette étape comprend au moins les deux sous-étapes décrites ci-après.

**1.1) Mesures du débit de véhicules sur un réseau routier d'apprentissage**

Au cours de cette sous-étape, il s'agit de réaliser des mesures du débit de véhicules sur un réseau routier d'apprentissage, au moyen de capteurs de trafic routier fixes.

De manière très préférée, on réalise des mesures de débit véhiculaire en au moins un point d'une pluralité de brins routiers du réseau routier d'apprentissage. De manière classique, la pluralité des données en entrée d'un réseau de neurones permet d'augmenter la capacité du réseau à représenter la réalité à modéliser, et cela est d'autant plus vrai en apprentissage profond. De manière préférée, la base d'apprentissage comprend des valeurs de débit pour au moins 100 brins routiers d'un réseau routier d'apprentissage, de manière très préférée pour au moins 500 brins routiers d'un réseau routier d'apprentissage.

De manière très préférée, on répète dans le temps les mesures de débit véhiculaire en un point donné de chaque brin routier d'une pluralité de brins routiers du réseau routier d'apprentissage, par exemple toutes les heures, de préférence toutes les minutes, d'une même journée. Une telle périodicité de la mesure peut permettre de relever l'état du trafic dans le temps avec précision, afin par exemple de déterminer les heures de pointe et d'observer les différentes fluctuations du débit au cours d'une journée.

Avantageusement, lorsque les mesures sont répétées dans le temps pendant une période supérieure à une semaine, de préférence un mois, de préférence une année, on peut associer à la mesure un descripteur catégoriel (par exemple une classe représentative du jour de l'année) permettant de catégoriser les mesures selon une segmentation temporelle donnée, par exemple, jours ouvrés, week-end, jours fériés, etc. Cela peut permettre au réseau de neurones d'apprendre à extrapoler temporellement en intégrant un descripteur catégoriel, précisant la segmentation temporelle choisie. Ainsi, il sera possible de prédire le débit pour n'importe quel jour de l'année.

**1.2) Obtention de descripteurs statiques et dynamiques d'une pluralité de brins routiers d'un réseau routier d'apprentissage**

Au cours de cette sous-étape, il s'agit d'obtenir des descripteurs (ou encore des paramètres, ou encore des attributs) statiques et dynamiques relatifs à la pluralité de brins routiers du réseau routier d'apprentissage, ainsi que des descripteurs statiques pour les brins routiers ayant un nœud commun avec le brin routier d'apprentissage. Autrement dit, la base d'apprentissage est construite en prenant en compte des descripteurs statiques pour les brins routiers d'apprentissage, mais aussi des brins routiers voisins, ou encore adjacents. Comme cela sera décrit ci-après, cela contribue à assurer une continuité spatiale du débit prédit entre brins adjacents.

Par descripteur statique relatif à un brin d'un réseau routier (d'apprentissage ou non), on entend un paramètre relatif au brin du réseau routier invariant dans le temps. Les descripteurs statiques des brins d'un réseau routier selon l'invention peuvent aussi être appelés « données macroscopiques du réseau routier » ou encore « données structurelles » dans la littérature. Les données macroscopiques correspondent aux informations liées au réseau routier, telles que l'infrastructure, la pente, la signalisation, etc. Comme cela sera décrit ci-après, dans l'invention, on prend en compte les descripteurs statiques relatifs à un brin routier (d'apprentissage ou non), ainsi que les descripteurs statiques relatifs à ses brins directement voisins (ayant au moins un nœud en commun).

Selon un aspect de l'invention, les descripteurs statiques d'un brin d'un réseau routier (d'apprentissage ou non) peuvent comprendre la topographie (c'est-à-dire la pente, la longueur, les virages, les intersections, etc.) du brin routier, le type de brin routier (par exemple route urbaine, autoroute, etc.), le nombre de voies du brin routier, la vitesse maximale du brin routier, la signalisation du brin routier, etc.

Préférentiellement, les descripteurs statiques d'un brin d'un réseau routier (d'apprentissage ou non) comprennent au moins le type de brin routier, le nombre de voies du brin routier, la vitesse maximale du brin routier et la longueur du brin routier.

De préférence, on peut obtenir les descripteurs statiques de brins d'un réseau routier (d'apprentissage ou non) par un système d'information géographique (SIG). Here ™, Google Maps ™, OpenStreetMap ™ sont des exemples de système d'information géographique. En général, les SIG proposent une modélisation d'un réseau routier sous forme de graphe, où chaque brin est considéré comme une liaison entre deux nœuds dont les descripteurs statiques sont invariables. Cette représentation est particulièrement adaptée à la mise en œuvre de l'invention, puisque l'on considère, pour chaque brin d'un réseau routier, ses brins voisins (ou encore adjacents), en amont et en aval, comme cela sera décrit pour les besoins de l'invention ci-après.

Par descripteur dynamique (ou encore descripteur temporel ou encore descripteur variant dans le temps) relatif à un brin d'un réseau routier (d'apprentissage ou non), on entend un paramètre relatif au brin du réseau routier variant dans le temps. Il peut s'agir d'une série temporelle donnant la vitesse moyenne des véhicules sur le brin routier considéré pour chaque heure d'une journée. De telles informations peuvent également être obtenues via des SIG.

Comme cela sera décrit par la suite, le procédé selon l'invention exploite de manière séparée les descripteurs statiques et dynamiques selon l'invention, ou dit autrement, le procédé selon l'invention met en œuvre une architecture d'apprentissage séparant les descripteurs statiques des descripteurs dynamiques. La séparation des descripteurs statiques et dynamiques permet d'utiliser des modèles (en l'espèce des réseaux de neurones récurrents) différents et adaptés à leurs caractéristiques propres. Par exemple, comme cela sera décrit ci-après, des modèles dits d'« attention » sont plus adaptés à garder une mémoire de longues séquences temporelles, et donc seront plus adaptés aux descripteurs dynamiques. De même, comme cela sera décrit ci-après, des réseaux de neurones de type LSTM permettent d'apprendre les dépendances spatiales de séquences de descripteurs statiques relativement courtes.

Ainsi, à l'issue de cette étape, la base d'apprentissage selon l'invention comprend au moins des descripteurs statiques et dynamiques pour une pluralité de brins routiers d'un réseau routier d'apprentissage, ainsi que les descripteurs statiques des brins ayant un noeud en commun avec les brins routiers du réseau routier d'apprentissage.

Avantageusement, et aux fins de l'étape 2) de construction du modèle, la base d'apprentissage peut être découpée en 2, de préférence 3, sous-ensembles :

- un premier sous-ensemble, comprenant par exemple entre 70% à 85%, de préférence 80% de l'ensemble des données de la base d'apprentissage, destiné à l'apprentissage des réseaux de neurones : ces données vont directement déterminer la mesure d'erreur d'estimation des réseaux et la façon d'ajuster les valeurs des paramètres du réseau de neurones ; c'est la base de données d'entrainement ("training set" en anglais).

- un deuxième sous-ensemble, comprenant par exemple entre 15% et 30%, de préférence 20% de l'ensemble des données de la base d'apprentissage, destiné à valider le processus d'apprentissage pendant son exécution : ces données servent à suivre le succès de l'opération d'apprentissage pendant son déroulement mais n'influent pas directement sur l'ajustement des paramètres des réseaux ; c'est la base de données de validation. Si les résultats obtenus ne sont pas satisfaisants, cela peut signifier que la base d'apprentissage n'est pas suffisamment représentative et qu'il peut être nécessaire d'augmenter la base de d'apprentissage avec des données d'entrainement couvrant une gamme plus large de débits routiers, via un ajout de brins routiers.

- de manière optionnelle mais avantageuse, un troisième sous-ensemble, comprenant un nombre de données issues de la base d'apprentissage dans une proportion équivalente à la base de données de validation, destiné à tester la performance d'apprentissage, à la fin de l'apprentissage ; c'est la base de données de test.

**2) Construction d'un modèle pour déterminer un débit de véhicules sur un brin d'un réseau routier au moyen de la base d'apprentissage**

Au cours de cette étape, il s'agit de construire un modèle pour déterminer un débit de véhicules sur un brin d'un réseau routier à partir de descripteurs statiques et dynamiques du brin du réseau routier, en entrainant, sur la base d'apprentissage construite à l'étape 1), une combinaison de deux réseaux de neurones récurrents, composée d'un réseau de neurones à mémoire court et long terme (connue sous l'acronyme LSTM, pour « Long and Short Term Memory » en anglais) suivie d'un réseau de neurones transformeur (« Transformer » en anglais).

Le réseau de type LSTM fait partie de la famille des réseaux neuronaux récurrents (RNN pour « Recursive Neural Network » en anglais). Un réseau de neurones récurrents est un réseau de neurones artificiels présentant des connexions récurrentes. Un réseau de neurones récurrents est constitué d'unités (neurones) interconnectées interagissant non-linéairement et pour lequel il existe au moins un cycle dans la structure. Les unités sont reliées par des arcs (synapses) qui possèdent un poids. La sortie d'un neurone est une combinaison non linéaire de ses entrées. Ainsi, les RNN permettent de suivre une séquence d'informations. Notamment, ces réseaux sont particulièrement adaptés aux données séquentielles, car ils utilisent une mémoire interne pour conserver des informations sur les étapes de temps précédentes. Néanmoins les réseaux de neurones récurrents se heurtent au problème de disparition du gradient pour apprendre à mémoriser des évènements passés.

Les réseaux de neurones LSTM sont des variants améliorés des RNN permettant de répondre au problème de disparition de gradient. En effet, chaque unité computationnelle est liée non seulement à un état caché mais également à un état de la cellule qui joue le rôle de mémoire. Le passage se fait par transfert à gain constant et égal à 1. De cette façon les erreurs se propagent aux pas antérieurs sans phénomène de disparition de gradient. L'état de la cellule peut être modifié à travers une porte d'entrée, qui autorise ou bloque la mise à jour (« input gate »). De même une porte de sortie contrôle si l'état de cellule est communiqué en sortie de l'unité LSTM (« output gate »). La version la plus répandue des LSTM utilise aussi une porte permettant la remise à zéro de l'état de la cellule (« forget gate »).

Le réseau de type transformeur (« Transformer » en anglais) est également un variant des réseaux de neurones récurrents. Les réseaux transformeurs sont appropriés pour gérer des données séquentielles. Cependant, contrairement aux autres RNN, les transformeurs n'exigent pas que les données séquentielles soient traitées dans l'ordre. Grâce à cette fonctionnalité, le transformeur permet une parallélisation beaucoup plus importante que les RNN et donc des temps d'entraînement réduits. Les RNNs chainés traitent les jetons (« tokens » en anglais) séquentiellement, en maintenant un vecteur d'état qui contient une représentation des données vues après chaque jeton. Pour traiter le n-ième jeton, le modèle combine l'état représentant la séquence d'entrée jusqu'au (n-1)-ième jeton avec l'information du nouveau jeton pour créer un nouvel état représentant la séquence d'entrée jusqu'au n-ième jeton. Théoriquement, l'information d'un jeton peut se propager loin vers le début de la séquence d'entrée, si à chaque point l'état continue à encoder de l'information relative au jeton. Mais en pratique, ce mécanisme est imparfait : à cause du problème de l'évanescence du gradient, l'état du modèle à la fin du traitement d'une longue séquence d'entrée n'arrive pas à se rappeler d'information précise à propos des premiers jetons. Pour résoudre ce problème, les réseaux de type transformeur introduisent des mécanismes d'attention. Ces mécanismes permettent à un modèle de regarder directement, et d'extraire, l'état de n'importe quel jeton précédent dans la séquence. La couche d'attention peut accéder à tous les précédents états et leur donner un poids selon leur pertinence par rapport au jeton courant, fournissant ainsi une information saillante sur les jetons éloignés.

L'imbrication selon l'invention des deux réseaux de neurones récurrents précités est réalisée selon les étapes 2.1 à 2.4 décrites ci-après.

**2.1) Détermination d'une pluralité de séquences de descripteurs statiques ordonnées**

Au cours de cette sous-étape, pour chaque brin routier de la pluralité de brins routier du réseau routier d'apprentissage, on détermine une séquence ordonnée de descripteurs statiques relative au brin routier d'apprentissage fonction des descripteurs statiques du brin routier d'apprentissage et des descripteurs statiques ou d'une statistique des descripteurs statiques des brins routiers d'apprentissage ayant un nœud en commun avec le brin routier d'apprentissage, la séquence ordonnée de descripteurs statiques étant ordonnée selon un sens de circulation prédéfini des véhicules sur le brin routier d'apprentissage.

Autrement dit, selon l'invention, la séquence ordonnée de descripteurs statiques comprend les descripteurs statiques ou une statistique des descripteurs statiques des brins routiers d'apprentissage ayant un nœud en commun avec le brin routier considéré et situés en amont du brin considéré selon le sens de circulation prédéfini, suivis des descripteurs statiques du brin routier considéré, eux-mêmes suivis des descripteurs statiques ou de la statistique des descripteurs statiques des brins routiers ayant un nœud en commun avec le brin routier considéré et situés en aval du brin considéré selon le sens de circulation prédéfini.

Une telle séquence ordonnée permet de prendre en compte les descripteurs statiques des brins routiers adjacents ou encore voisins du brin routier considéré, qui plus est selon un sens de circulation.

Selon une mise en œuvre préférée de l'invention, la statistique des descripteurs statiques des brins routiers ayant un nœud en commun avec le brin routier considéré peut être une moyenne. Cela permet de prendre en compte des tendances moyennes des descripteurs statiques sur les brins routiers adjacents.

La séquence de descripteurs statiques ordonnée selon l'invention associée à un brin routier peut être représentée sous la forme d'un vecteur. Plus précisément, considérons un brin routier ayant d descripteurs statiques représentés par un vecteur $x \in \mathbb{R}^{d}$. Soient $Y \in \mathbb{R}^{k \times d}$ et $Z \in \mathbb{R}^{k' \times d}$ des matrices relatives aux *k* et *k'* brins (k et k' peuvent être supérieurs ou égaux à 1) situés en amont et en aval (par rapport au sens de circulation) du brin *x*, chaque brin en amont et en aval possédant d descripteurs respectivement.

Selon un mode de mise en œuvre selon lequel les descripteurs statiques des brins adjacents au brin considéré sont pris en compte dans la séquence ordonnée de descripteurs statiques selon l'invention sous la forme d'une statistique (par exemple une moyenne), on peut concaténer le vecteur *x* avec un vecteur $\bar{Y} \in \mathbb{R}^{d}$ et un vecteur $\bar{Z} \in \mathbb{R}^{d}$ comprenant respectivement la statistique (par type de descripteur) des descripteurs statiques des matrices *Y* et *Z*. On obtient une séquence (représentée sous la forme d'un vecteur) ordonnée $S \in \mathbb{R}^{3 \times d}$, appelée triplet par la suite, pouvant s'écrire :

$$S = [\bar{Y}, x, \bar{Z}].$$

Ainsi, dans cette conception, le vecteur S représente une séquence ordonnée de descripteurs statiques, notés $s_p$ par la suite, relatifs à un brin routier, telle que $S = (s_p : p \in 3 \times d)$.

Selon un mode de mise en œuvre où chacun des descripteurs statiques des brins adjacents au brin considéré sont pris en compte dans la séquence ordonnée de descripteurs statiques selon l'invention, la séquence ordonnée selon l'invention peut s'écrire :
$S = [Y11, ..., Y1K, ..., YD1, ..., YDK, x, Z11, ..., Z1K', ..., ZD1, ...; , ZDK']$ avec D variant de 1 à d, K variant de 1 à k, et K' variant de 1 à k', et $S \in \mathbb{R}^{(k+k'+1) \times d}$. Ainsi, dans cette conception, le vecteur S représente une séquence ordonnée de descripteurs statiques, notés $s_p$ par la suite, relatifs à un brin routier, telle que $S = (s_p : p \in (k + k' + 1) \times d)$.

A l'issue de cette sous-étape, on obtient une séquence ordonnée de descripteurs statiques pour chaque brin routier de la pluralité de brins routiers du réseau routier d'apprentissage selon l'invention.

**2.2) Entrainement d'un réseau de neurones LSTM sur la pluralité de séquences ordonnées de descripteurs statiques**

Au cours de cette sous-étape, on entraine un réseau de neurones LSTM sur la pluralité de séquences ordonnée de descripteurs statiques déterminées à la sous-étape précédente.

Par la suite, on utilise la notation suivante pour les vecteurs d'activation du réseau de neurones LSTM liés :

- à la porte d'entrée : $i_p$ ;
- à la porte de sortie : $o_p$ ;
- à la porte d'oubli : $f_p$ ;
- à l'état de la cellule : $c_p$ ;
- à la porte de sortie : $h_p$.

Selon une mise en œuvre de l'invention, les vecteurs d'activation du réseau de neurones LSTM, pour chaque descripteur statique $s_p$, peuvent s'écrire de la manière suivante :

$$i_p = \sigma\left(W_i \cdot \left[h_{p-1}, s_p\right] + b_i\right)$$

$$o_p = \sigma\left(W_o \cdot \left[h_{p-1}, s_p\right] + b_o\right)$$

$$f_p = \sigma\left(W_f \cdot \left[h_{p-1}, s_p\right] + b_f\right)$$

$$c_p = f_p \cdot c_{p-1} + i_p \cdot \tanh\left(W_c \cdot \left[h_{p-1}, s_p\right] + b_c\right)$$

$$h_p = o_p \cdot \tanh\left(c_p\right)$$

tel que *p* est le pas spatial (ou encore l'indice du descripteur) dans le triplet *S*, $W_i$, $W_o$, $W_f$, et $W_c$ sont des vecteurs de poids relatifs respectivement à la porte d'entrée $i_p$, à la porte de sortie $o_p$, à la porte d'oubli $f_p$, et à l'état de la cellule $c_p$, et $b_i$, $b_o$, $b_f$, et $b_c$ sont de vecteurs de biais relatifs respectivement à la porte d'entrée $i_p$, à la porte de sortie $o_p$, à la porte d'oubli $f_p$ , et à l'état de la cellule $c_p$, et où $\sigma$ est une fonction sigmoïde définie par $\sigma(x) = \frac{1}{1+e^{-x}}$.

Les vecteurs poids et les vecteurs de biais sont appris durant le processus d'entrainement.

Les équations ci-dessus ne sont valables que pour un seul pas spatial. Ainsi, si le triplet est une séquence de N éléments, ces équations sont calculées N fois.

### 2.3) Concaténation du résultat du réseau de neurones LSTM avec les descripteurs dynamiques

Au cours de cette sous-étape, pour chaque brin routier de la pluralité de réseaux routiers de la base d'apprentissage, on concatène le résultat (ou encore la sortie) du LSTM déterminée à l'étape 2.2) pour le brin routier considéré avec les descripteurs dynamiques de ce brin routier.

Autrement dit, au cours de cette étape, la sortie h du LSTM déterminée pour la séquence de descripteurs statiques ordonnée S d'un brin *x* est concaténée avec les descripteurs dynamiques du brin *x*, notés $T = (\tau_t : t \in \Gamma)$, selon la formule suivante :

$$ST = [h, T]$$

tel que $\Gamma$ est la période de mesure des descripteurs dynamiques considérée (par exemple une durée de 24 heures).

### 2.4) Entrainement d'un réseau de neurones Transformer sur la concaténation du résultat du réseau de neurones LSTM avec les descripteurs dynamiques

Au cours de cette sous-étape, on entraine le réseau de neurones transformeur sur la concaténation du résultat du réseau de neurones LSTM avec les descripteurs dynamiques de chaque brin routier, appelée dans la suite « entrée du Transformer ». De manière classique, cela signifie que l'entrée, que l'on note *ST,* du Transformer est introduite dans la partie encodeur du transformer.

Selon une mise en oeuvre de l'invention, l'encodeur peut être composé d'un empilement de couches d'encodage identiques avec la même série d'opérations. Chaque encodeur peut contenir principalement une couche d'attention multi-têtes, une couche d'encodage positionnel et une couche linéaire connectée avec une fonction d'activation de type ReLU (de « REctified Linear Unit » en anglais ou unité linéaire rectifiée).

Selon une mise en oeuvre, dans la couche d'attention, le transformer peut apprendre trois matrices de poids : la matrice de poids des requêtes $W_Q$, la matrice des clés $W_K$ et la matrice de poids des valeurs $W_V$, l'ensemble ($W_Q$, $W_K$, $W_V$) étant appelé tête d'attention. Ces matrices de poids contiennent des paramètres qui sont optimisés durant l'apprentissage. Ces paramètres servent à pondérer les valeurs d'entrée. L'attention, notée A, pour l'ensemble de la séquence peut être exprimée en représentation matricielle pour toute la séquence *ST* de la manière suivante :

$$\mathrm{A}(Q, K, V) = \mathrm{softmax}\left(\frac{QK^T}{\sqrt{d_k}}\right).V$$

où $Q \in \mathbb{R}^{m \times d_k}$, $K \in \mathbb{R}^{n \times d_k}$ et $V \in \mathbb{R}^{n \times d_v}$, chaque ligne des clés *K,* des requêtes *Q* et des valeurs *V* est une représentation vectorielle d'éléments de la séquence, et softmax est une fonction pour convertir un vecteur de nombres réels en une distribution de probabilité. La fonction softmax permet de normaliser les scores d'attention, assurant que l'attention donnée à chaque composante de la séquence en entrée du transformer est proportionnelle à son importance relative par rapport aux autres composantes dans la séquence.

Selon une mise en oeuvre de l'invention, pendant l'entrainement du transformeur, la séquence *ST* composée de descripteurs statiques et de descripteurs dynamiques $ST = (\varphi_1, \varphi_2, \ldots \ldots \ldots, \varphi_{3\times d+\Gamma})$ est transmise en une seule fois dans le premier bloc d'encodeur, et ensuite transmise à son successeur, autrement dit à l'encodeur suivant. Le processus est répété jusqu'à ce que tous les N blocs d'encodage aient traité l'entrée du transformeur. Une représentation encodée de *ST* est alors obtenue. Dans ce contexte, les modèles basés sur les réseaux de neurones récurrents (RNN) sont limités dans leur capacité à utiliser des informations provenant d'éléments observés loin dans le passé dans la séquence. Plus généralement, ils ont davantage de difficultés à relier des informations séquentielles qui sont éloignées les unes des autres. L'attention en revanche permet de relier efficacement et rapidement chaque élément dans une séquence à tous les éléments dans une autre séquence, ainsi qu'à tous les autres éléments de la même séquence.

Ainsi, à l'issue de cette étape, on obtient un modèle pour déterminer un débit de véhicules sur un brin d'un réseau routier, à partir de descripteurs statiques et dynamiques du brin du réseau routier, le modèle comprenant une combinaison de deux réseaux de neurones récurrents, précisément un LSTM et un Transformer, entrainés sur une base d'apprentissage.

### 3) Détermination du débit de véhicules sur au moins un brin d'un réseau routier au moyen du modèle pour déterminer un débit de véhicules sur un brin d'un réseau routier construit

Au cours de cette étape, il s'agit d'appliquer le modèle construit sur un réseau routier d'apprentissage tel que décrit à l'étape 2), à au moins un brin routier d'un deuxième réseau routier, de manière à en déterminer le débit de véhicules sur ce brin routier

Plus précisément, au cours de cette étape, on réalise les sous-étapes suivantes :

#### 3.1) Obtention de descripteurs statiques et dynamiques du au moins un brin routier du réseau routier

Au cours de cette sous-étape, il s'agit d'obtenir des descripteurs statiques et dynamiques relatifs audit au moins un brin routier du réseau routier considéré, ainsi que des descripteurs statiques relatifs aux brins routiers du deuxième réseau routier ayant un nœud commun avec ledit au moins un brin routier considéré et étant situés en amont et/ou en aval (par rapport à un sens de circulation prédéfini) dudit au moins un brin routier considéré.

Il est bien clair que cette sous-étape correspond en tout point à la sous-étape 1.2) décrite ci-dessus, sauf qu'elle est appliquée ici audit au moins un brin routier du réseau routier considéré et à ses brins adjacents, et non plus à une pluralité de brins routiers du réseau routier d'apprentissage et à leurs brins adjacents.

#### 3.2) Détermination de séquences de descripteurs statiques ordonnées

Au cours de cette sous-étape, pour le au moins un brin routier du réseau routier considéré, on détermine une séquence de descripteurs statiques ordonnée, ladite séquence de descripteurs statiques ordonnée étant ordonnée selon un sens de circulation desdits véhicules sur ledit brin routier, ladite séquence de descripteurs statiques ordonnée comprenant une moyenne des descripteurs statiques des brins routiers ayant un nœud en commun avec le brin routier considéré et situés en amont du brin considéré selon ledit sens de circulation prédéfini, suivis des descripteurs statiques du brin routier considéré, suivis d'une statistique (par exemple une moyenne) des descripteurs statiques des brins routiers ayant un nœud en commun avec le brin routier considéré et situé en aval du brin considéré selon ledit sens de circulation prédéfini.

Il est bien clair que cette sous-étape correspond en tout point à la sous-étape 2.1) décrite ci-dessus, sauf qu'elle est appliquée audit au moins un brin routier du réseau routier considéré, et non plus à une pluralité de brins routiers du réseau routier d'apprentissage.

#### 3.3) Application du réseau de neurones LSTM entrainé

Au cours de cette sous-étape, pour le au moins un brin routier du réseau routier considéré, on applique le réseau de neurones LSTM entrainé à l'étape 2.2) sur au moins la séquence de descripteurs statiques ordonnée du brin routier déterminée à l'étape 3.2).

#### 3.4) Concaténation du résultat du réseau de neurones LSTM avec les descripteurs dynamiques

Au cours de cette sous-étape, pour ledit au moins un brin routier du réseau routier considéré, on concatène le résultat (ou encore la sortie) du LSTM déterminée à l'étape 3.3) pour le brin routier considéré avec les descripteurs dynamiques de ce brin routier.

Il est bien clair que cette sous-étape correspond en tout point à la sous-étape 2.3) décrite ci-dessus, sauf qu'elle est appliquée audit au moins un brin routier du réseau routier considéré, et non plus à la pluralité de brins routiers du réseau routier d'apprentissage.

#### 3.5) Application du réseau de neurones Transformer entrainé sur la concaténation du résultat du réseau de neurones LSTM avec les descripteurs dynamiques

Au cours de cette sous-étape, on applique le réseau de neurones transformeur sur la concaténation du résultat du réseau de neurones LSTM avec les descripteurs dynamiques dudit au moins un brin routier.

Ainsi, le procédé selon l'invention repose sur la prise en compte des brins routiers et de leur voisinage direct, qui plus est selon un sens de circulation (brins en amont et en aval). Cette description permet une augmentation de données en entrée d'un facteur 3, et une incorporation du sens du trajet dans la structure des descripteurs. De plus, cela permet de prendre en compte le fait que les brins routiers sont intrinsèquement reliés entre eux. En effet, l'état du trafic d'un brin routier est dépendant de l'état du trafic des brins voisins situés en amont et en aval. De plus, cela permet de prendre en compte le fait que deux brins ayant les mêmes descripteurs statiques ne présenteront pas forcément les mêmes variations du débit.

Par ailleurs, l'utilisation du LSTM comme modèle d'extraction des caractéristiques spatiales d'un brin routier obtenues via les descripteurs statiques permet de considérer la séquence du triplet comme une série statique et donc de préserver la continuité du débit entre les brins adjacents. Pour prédire la série temporelle représentant le débit, la sortie du LSTM (contenant une représentation dense des caractéristiques spatiales respectant l'ordre des brins) est concaténée avec les descripteurs dynamiques. Cela crée une séquence deux fois plus grande que la sortie du LSTM. Cette séquence constitue alors l'entrée du transformeur, qui permet de capturer des motifs à long terme. Sa sortie peut être suivie de couches linéaires et de fonctions d'activation ReLU permettant de prédire le débit. Ainsi, la méthode d'apprentissage profond mise en œuvre dans le procédé selon l'invention permet via un LSTM de capturer les caractéristiques locales, et via un Transformer de capturer des motifs à long terme. Par ailleurs, la présente invention permet d'avoir des estimations de débit pour n'importe quel territoire sans mesures préalables faites sur ce territoire.

Selon une mise en œuvre de l'invention, à partir du débit de véhicules sur au moins un brin d'un réseau routier déterminé tel que décrit ci-dessus, on peut :

- adapter les infrastructures du réseau routier en fonction dudit débit de véhicules déterminé pour ledit au moins un brin routier, par exemple par la création de nouvelles voies, la modification de la signalisation, etc. A partir du débit, les pouvoirs publics et les entreprises de travaux publics peuvent en effet déterminer les routes ayant un débit de véhicules élevé et adapter les routes aux utilisateurs ;
- et/ou adapter les limitations de vitesse du réseau routier en fonction dudit débit de véhicules déterminé pour ledit au moins un brin routier, par exemple via des panneaux lumineux en fonction du débit estimé en aval desdits panneaux, afin de fluidifier le trafic ;
- et/ou afficher ledit débit de véhicules déterminé pour ledit au moins un brin routier ou un paramètre déterminé à partir dudit débit de véhicules tel qu'une qualité de l'air, par exemple via un affichage sur le tableau de bord des véhicules empruntant le réseau routier, sur un dispositif portatif autonome, tel qu'un appareil de géolocalisation (de type GPS), un téléphone portable (de type téléphone intelligent), sur un site internet, etc. L'affichage peut prendre la forme d'une note ou d'un code couleur ou d'une épaisseur de représentation de la route. Un usager du réseau routier peut, en fonction du débit prédit pour le brin routier considéré, choisir d'emprunter un trajet n'incluant pas ce brin routier ;
- et/ou afficher une qualité de l'air estimée en fonction du débit déterminé tel que décrit ci-dessus, par exemple via un objet connecté (un panneau) dans une rue ou dans un ensemble de rues (quartier). Une information sur le débit véhiculaire d'un brin routier peut en effet permettre une estimation de la qualité de l'air à proximité de ce brin routier.

Ainsi, la présente invention peut être vue comme un capteur virtuel de débit véhiculaire, dans le sens où elle permet de simuler une mesure de débit véhiculaire. On peut ainsi déployer un nombre pratiquement illimité de ces capteurs virtuels à faible cout pour avoir une vision d'ensemble du débit sur un territoire.

En outre, l'invention concerne un produit programme d'ordinateur téléchargeable depuis un réseau de communication et/ou enregistré sur un support lisible par un ordinateur (par exemple un calculateur embarqué) et/ou exécutable par un processeur. Ce programme comprend des instructions de code de programme pour la mise en oeuvre du procédé tel que décrit ci-dessus, notamment des étapes 2) et/ou 3) décrites ci-dessus, lorsque le programme est exécuté sur un ordinateur.

**Exemples**

Les caractéristiques et avantages du procédé selon l'invention apparaîtront plus clairement à la lecture de l'exemple d'application ci-après.

Une base d'apprentissage de brins routiers pour lesquels les débits routiers sont connus a été utilisée. Pour la construction du modèle selon l'invention, 70% des brins sont utilisés pour entrainer le modèle selon l'invention et les 30% restants sont utilisés pour la validation.

**Premier exemple**

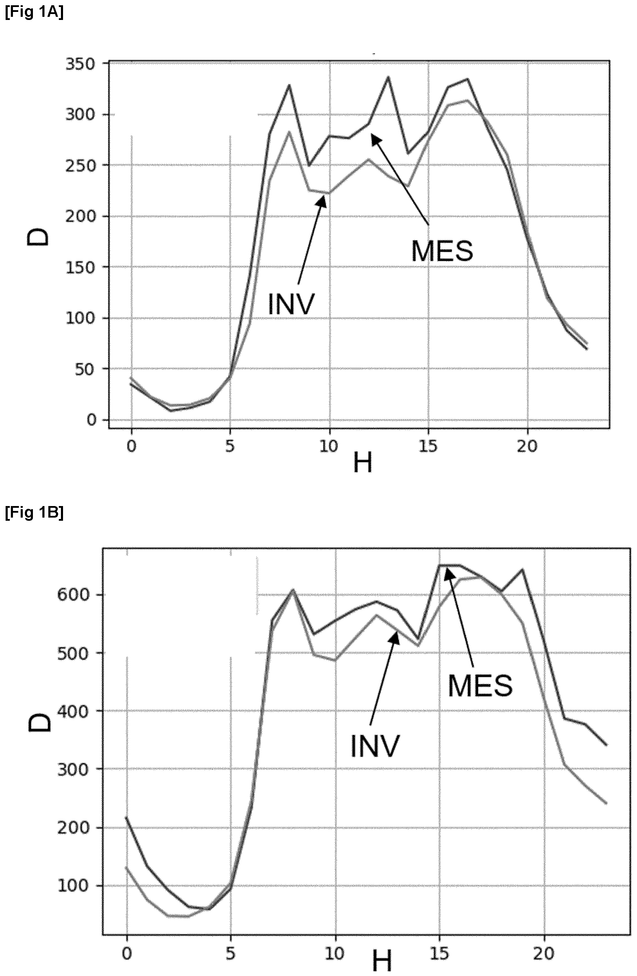

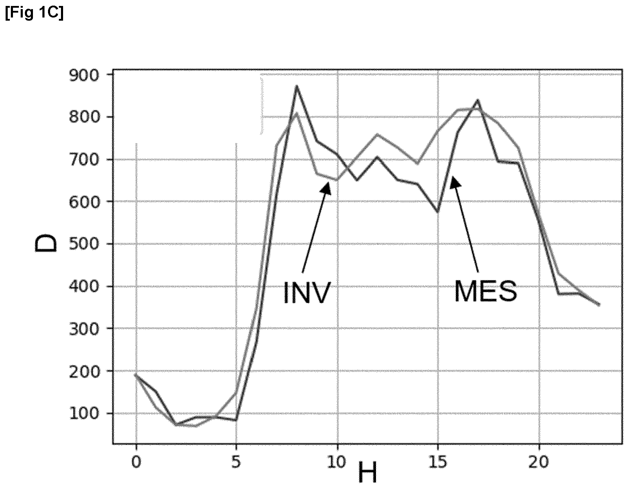

Le premier exemple consiste en une comparaison entre le débit réel horaire (mesuré) et le débit estimé par le procédé selon l'invention pour trois brins routiers de la base de données de validation. La figure 1A (respectivement la Figure 1B et la figure 1C) présente une courbe MES représentative du débit D (en nombre de véhicules par heure, noté *veh*/*h* ) mesuré en fonction de l'heure H de la journée (en heure) et une courbe INV représentative du débit D (en nombre de véhicules par heure, noté *veh*/*h* ) en fonction de l'heure H de la journée (en heure) déterminé par le procédé selon l'invention pour un premier (respectivement un deuxième et un troisième) brin routier de la base de données de validation issue du réseau routier d'apprentissage. On peut observer sur ces figures que le modèle selon l'invention est capable de prédire une plage importante de valeurs du débit (valeurs comprises entre 300 - 900 *veh*/*h*). De plus, les courbes INV déterminées par le procédé selon l'invention suivent les tendances des courbe MES mesurées, permettant ainsi de prédire les moments de congestion correspondant aux heures de pointe du matin et du soir (vers 8 h et 18 h).

**Deuxième exemple**

Le deuxième exemple consiste en une comparaison du débit déterminé par le procédé selon l'art antérieur décrit dans le document EP22204301A1 précité et par le procédé selon l'invention. Le tableau 1 présente une comparaison de l'erreur absolue, la moyenne de la statistique GEH, la valeur médiane de la statistique GEH, ainsi que le pourcentage de GEH supérieur à 5, d'une part déterminés par le procédé selon l'invention (colonne INV) et d'autre part par le procédé selon l'art antérieur (AA). La statistique GEH (des initiales de son créateur Geoffrey E. Havers) est une formule utilisée en ingénierie du trafic (prévisions de trafic et modélisation notamment) pour comparer deux volumes de trafic (typiquement, une série de trafics réels mesurés et une série de trafics issus d'une modélisation). Elle peut s'écrire :

$$E_{GEH} = \sqrt{\frac{2(y-\hat{y})^2}{y+\hat{y}}}$$

Où $y$ sont les mesures réelles et $\hat{y}$ sont les valeurs estimées par un procédé. Il est classiquement considéré que si $\overline{E_{GEH}} < 5\ (\sqrt{\mathrm{veh/h}})$ et si moins de 15% des débits prédits ont un GEH supérieur à $5\ (\sqrt{\frac{\mathrm{veh}}{\mathrm{h}}})$, alors les valeurs de débits modélisées sont considérées comme précises. On peut observer que le procédé selon invention a permis de diminuer considérablement les valeurs de ces grandeurs, démontrant ainsi les capacités d'extrapolation supérieure de l'apprentissage profond quant à la prédiction du débit. En particulier, la valeur de l'erreur absolue a été réduite d'un facteur supérieur à 3, le GEH moyen est inférieur à 5 et donc respecte les conditions, et enfin le % de GEH supérieur à 5 a été divisé par deux.

Tableau 1

| | **INV** | **AA** |
|---|---|---|
| Erreur absolue (*veh/h*) | 59,67 | *203,4* |
| GEH moyen $(\sqrt{\mathrm{veh/h}})$ | 4,48 | 8,8 |
| GEH median $(\sqrt{\mathrm{veh/h}})$ | *3,06* | 7,1 |
| % de GEH > 5 | *30,52* | 63,1 |

**Troisième exemple**

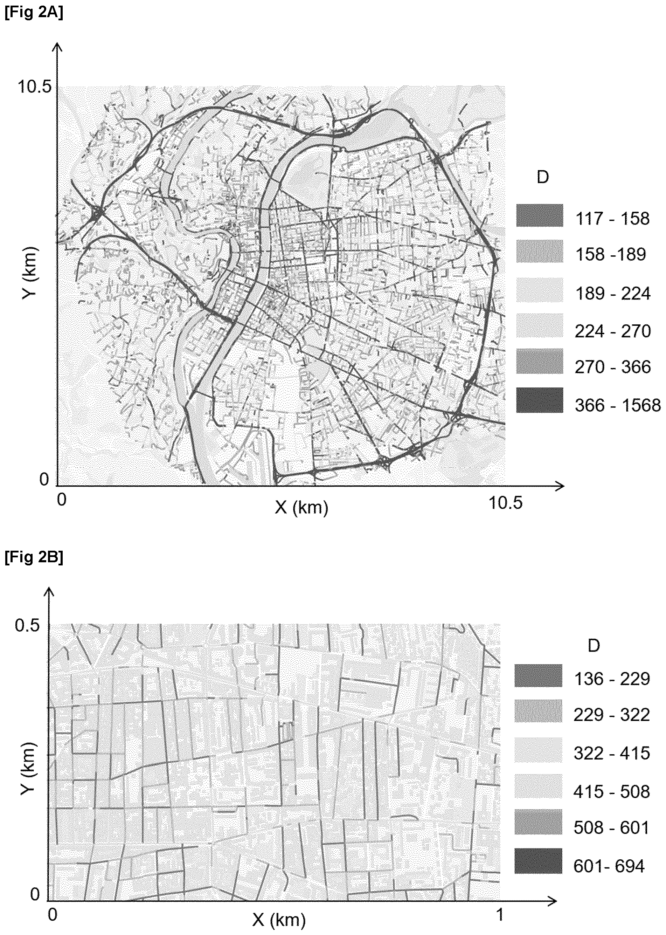

Dans le troisième exemple, le procédé selon l'invention est appliqué à la ville de Lyon (France) pour un jour ouvré, à une heure de pointe (18 h). Les données en entrée du modèle (descripteurs statiques et dynamiques) proviennent des services SIG tel que Here Maps. La figure 2A présente une carte du débit D (en nombre de véhicules par heure, représenté en niveau de gris, dont l'unité est noté veh/h) estimé par le procédé selon l'invention sur les principaux axes de la ville de Lyon, et la figure 2B présente un agrandissement d'une partie située dans la zone urbaine de la carte de la figure 2A. On peut observer sur ces figures que les brins périphériques (c'est-à-dire les brins situés à la périphérie de la ville) présentent un débit important comparé aux brins urbains (c'est-à-dire les brins situés au centre de la ville). Ceci correspond bien à la réalité observée du trafic routier. De plus, on peut observer que la continuité spatiale du débit est préservée. En effet, on peut observer que l'ordre de grandeur du débit reste le même pour les brins consécutifs où il n'y a pas de carrefour ou d'intersection. De plus, la prédiction du débit par le procédé selon l'invention est obtenue en environ 1/4h sur un processeur de type Intel Core i7 @2.60 GHz avec 16 Go de mémoire, soit une durée divisée par deux par rapport au procédé selon l'art antérieur précité.

**Revendications**

1. Procédé pour la détermination d'un débit de véhicules sur au moins un brin routier d'un réseau routier, **caractérisé en ce qu'**on réalise au moins les étapes suivantes au moyen d'une base d'apprentissage comprenant, pour chaque brin routier d'apprentissage, une pluralité de brins routiers d'apprentissage d'un réseau routier d'apprentissage, au moins une mesure du débit de véhicules, au moins un descripteur statique, au moins un descripteur dynamique, ainsi qu'au moins un descripteur statique pour des brins routiers d'apprentissage dudit réseau routier d'apprentissage ayant un nœud en commun avec ledit brin routier d'apprentissage :

   A) On construit un modèle pour déterminer un débit de véhicules sur un brin routier d'un réseau routier à partir de descripteurs statiques et dynamiques dudit brin routier dudit réseau routier en appliquant au moins les sous-étapes suivantes :

      I) pour chaque brin routier d'apprentissage de ladite pluralité de brins routiers d'apprentissage, on détermine une séquence ordonnée de descripteurs statiques relative audit brin routier d'apprentissage fonction desdits descripteurs statiques dudit brin routier d'apprentissage et desdits descripteurs statiques ou d'une statistique desdits descripteurs statiques desdits brins routiers d'apprentissage ayant un nœud en commun avec ledit brin routier d'apprentissage, ladite séquence ordonnée de descripteurs statiques étant ordonnée selon un sens de circulation prédéfini desdits véhicules sur ledit brin routier d'apprentissage ;

II) on entraine un réseau de neurones à mémoire court et long terme sur ladite pluralité de séquences ordonnées de descripteurs statiques relatives à ladite pluralité de brins routiers d'apprentissage ;
III) pour chaque brin routier d'apprentissage de ladite pluralité de brins routiers d'apprentissage, on concatène un résultat dudit réseau de neurones à mémoire court et long terme pour ledit brin routier d'apprentissage avec lesdits descripteurs dynamiques dudit brin routier d'apprentissage ;
IV) on entraine un réseau de neurones transformeur sur ladite pluralité de concaténations dudit résultat dudit réseau de neurones à mémoire court et long terme pour ledit brin routier d'apprentissage avec lesdits descripteurs dynamiques dudit brin routier d'apprentissage ;

B) on obtient au moins un descripteur statique et au moins un descripteur dynamique dudit brin routier dudit réseau routier, ainsi qu'au moins un descripteur statique pour des brins routiers ayant un nœud en commun avec ledit brin routier ;
C) au moyen dudit au moins un descripteur statique et dudit au moins un descripteur dynamique dudit brin routier dudit réseau routier, ainsi que dudit au moins un descripteur statique pour lesdits brins routiers ayant un nœud en commun avec ledit brin routier, et au moyen dudit modèle pour déterminer un débit de véhicules sur un brin routier d'un réseau routier en fonction de descripteurs statiques et dynamiques dudit brin dudit réseau routier, on détermine ledit débit de véhicules sur ledit brin routier dudit réseau routier.

**2.** Procédé selon la revendication 1, dans lequel on construit ladite base d'apprentissage en réalisant au moins les sous-étapes suivantes pour chaque brin routier d'apprentissage de ladite pluralité de brins routiers d'apprentissage dudit réseau routier d'apprentissage :

i) On mesure au moins un débit de véhicules sur ledit brin routier d'apprentissage au moyen d'au moins un capteur fixe de mesure de trafic ;
ii) On obtient au moins un descripteur statique et au moins un descripteur dynamique dudit brin routier d'apprentissage, ainsi qu'un descripteur statique pour chacun desdits brins routier ayant un noeud commun avec ledit brin routier d'apprentissage.

**3.** Procédé selon la revendication 2, dans lequel ledit capteur fixe de mesure de trafic est une boucle de comptage.

**4.** Procédé selon l'une des revendications précédentes, dans lequel lesdits descripteurs statiques dudit au moins un brin routier dudit réseau routier, respectivement desdits brins routiers d'apprentissage dudit réseau routier d'apprentissage, comprennent au moins un type, un nombre de voie, une longueur et une vitesse maximale dudit brin routier, respectivement desdits brins routiers d'apprentissage.

**5.** Procédé selon l'une des revendications précédentes, dans lequel lesdits descripteurs dynamiques dudit au moins un brin routier dudit réseau routier, respectivement desdits brins routiers d'apprentissage dudit réseau routier d'apprentissage, consistent en une séquence des vitesses moyennes des véhicules pour chaque heure d'une journée sur ledit brin routier, respectivement sur lesdits brins routiers d'apprentissage.

**6.** Procédé selon l'une des revendications précédentes, dans lequel ladite statistique est une moyenne.

**7.** Procédé selon l'une des revendications précédentes, dans lequel, pour ledit au moins un brin routier, respectivement pour chacun desdits brins routiers d'apprentissage dudit réseau routier d'apprentissage, on détermine ladite séquence ordonnée de descripteurs statiques relative audit brin routier, respectivement audit brin routier d'apprentissage, en formant un vecteur S s'écrivant :

$$S = [\overline{Y}, x, \overline{Z}]$$

Où le vecteur *x* correspond auxdits descripteurs statiques dudit brin routier, respectivement dudit brin routier d'apprentissage, $\overline{Y}$ et $\overline{Z}$ sont des vecteurs de ladite statistique desdits descripteurs statiques desdits brins routiers, respectivement desdits brins routiers d'apprentissage, ayant un nœud en commun avec ledit brin routier, respectivement avec ledit brin routier d'apprentissage, et situés en amont et en aval dudit brin routier, respectivement dudit brin routier d'apprentissage, selon ledit sens de circulation prédéfini.

**8.** Procédé selon l'une des revendications précédentes, dans lequel, pour ledit au moins un brin routier, respectivement pour chacun desdits brins routiers d'apprentissage, on concatène ledit résultat dudit réseau de neurones à mémoire court et long terme pour ledit au moins un brin routier, respectivement pour ledit brin routier d'apprentissage, avec lesdits descripteurs dynamiques dudit au moins un brin routier, respectivement dudit brin routier d'apprentissage, de la manière suivante :

$$ST = [h, T]$$

où h est un vecteur correspondant à la sortie dudit réseau de neurones à mémoire court et long terme pour ledit au moins un brin routier, respectivement pour ledit au moins un brin routier d'apprentissage, $T$ est un vecteur desdits descripteurs dynamiques dudit au moins un brin routier, respectivement dudit brin routier d'apprentissage, sous la forme $T = (\tau_t : t \in \Gamma)$ où $\tau_t$ est un desdits descripteurs dynamiques dudit au moins un brin routier, respectivement dudit brin routier d'apprentissage, mesuré au temps au pas de temps t d'une période de mesure $\Gamma$.

**9.** Produit programme d'ordinateur téléchargeable depuis un réseau de communication et/ou enregistré sur un support lisible par ordinateur et/ou exécutable par un processeur, comprenant des instructions de code de programme pour la mise en œuvre du procédé selon l'une des revendications précédentes, lorsque ledit programme est exécuté sur un ordinateur.

**10.** Procédé selon l'une des revendications 1 à 8, dans lequel on adapte des infrastructures du réseau routier en fonction dudit débit de véhicules déterminé pour ledit au moins un brin routier, et/ou on adapte des limitations de vitesse dudit réseau routier en fonction dudit débit de véhicules déterminé pour ledit au moins un brin routier, et/ou on affiche ledit débit de véhicules déterminé pour ledit au moins un brin routier et/ou on affiche une qualité de l'air estimée à partir dudit débit de véhicules déterminé pour ledit au moins un brin routier.

[Fig 1A]

350
300
250
200
150
100
50
0
D
0
5
10
15
20
H
MES
INV

[Fig 1B]

600
500
400
300
200
100
D
0
5
10
15
20
H
MES
INV

[Fig 1C]

900
800
700
600
500
400
300
200
100
D
INV
MES
0
5
10
15
20
H

[Fig 2A]

10.5
Y (km)
0
0
X (km)
10.5
D
117 - 158
158 -189
189 - 224
224 - 270
270 - 366
366 - 1568

[Fig 2B]

0.5
Y (km)
0
0
X (km)
1
D
136 - 229
229 - 322
322 - 415
415 - 508
508 - 601
601- 694

## RAPPORT DE RECHERCHE EUROPEENNE

Numéro de la demande
EP 25 16 1303

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (IPC) |
| A,D | EP 4 181 100 A1 (IFP ENERGIES NOW [FR]) 17 mai 2023 (2023-05-17) * alinéas [0026], [0027] * * alinéa [0059] * | 1-10 | INV. G06N3/044 G08G1/01 |
| A | ZAMAN MOSTAFA ET AL: "Assessing the Suitability of Different Machine Learning Approaches for Smart Traffic Mobility", 2023 IEEE TRANSPORTATION ELECTRIFICATION CONFERENCE & EXPO (ITEC), IEEE, 21 juin 2023 (2023-06-21), pages 1-6, XP034384325, DOI: 10.1109/ITEC55900.2023.10186901 * page 4, colonne de gauche * * figure 2 * | 1-10 | |
| A | WANG XIAOYANG SHAWNWANG@BJTU EDU CN ET AL: "Traffic Flow Prediction via Spatial Temporal Graph Neural Network", PROCEEDINGS OF THE WEB CONFERENCE 2020, ACMPUB27, NEW YORK, NY, USA, 20 avril 2020 (2020-04-20), pages 1082-1092, XP058470592, DOI: 10.1145/3366423.3380186 ISBN: 978-1-4503-7023-3 * 3. The proposed framework; page 1083, colonne de droite - page 1084, colonne de gauche * * 3.4 The framework; page 1086 * * 6. Conclusion; page 1091 * * figure 1 * | 1-10 | DOMAINES TECHNIQUES RECHERCHES (IPC): G08G G06N |

-/--

Le présent rapport a été établi pour toutes les revendications

| Lieu de la recherche | Date d'achèvement de la recherche | Examinateur |
|---|---|---|
| La Haye | 26 juin 2025 | de la Cruz Valera, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

1

Europäisches
Patentamt
European
Patent Office
Office européen
des brevets

# RAPPORT DE RECHERCHE EUROPEENNE

Numéro de la demande

EP 25 16 1303

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ZHANG ZHIHAO ET AL: "A Comprehensive Spatio-Temporal Model for Subway Passenger Flow Prediction", ISPRS INTERNATIONAL JOURNAL OF GEO-INFORMATION, vol. 11, no. 6, 9 juin 2022 (2022-06-09), page 341, XP093207520, ISSN: 2220-9964, DOI: 10.3390/ijgi11060341 * figure 2 * ----- | 1-10 | |
| A,D | CN 111 292 534 A (UNIV BEIJING TECHNOLOGY) 16 juin 2020 (2020-06-16) * figure 5 * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 26 juin 2025 | de la Cruz Valera, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................
& : membre de la même famille, document correspondant

1
EPO FORM 1503 03.82 (P04C02)

## ANNEXE AU RAPPORT DE RECHERCHE EUROPEENNE RELATIF A LA DEMANDE DE BREVET EUROPEEN NO.

EP 25 16 1303

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-06-2025

| Document brevet cité au rapport de recherche | Date de publication | Membre(s) de la famille de brevet(s) | Date de publication |
|---|---|---|---|
| EP 4181100 A1 | 17-05-2023 | EP 4181100 A1 | 17-05-2023 |
| | | FR 3129021 A1 | 12-05-2023 |
| CN 111292534 A | 16-06-2020 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- CN 111292534 A
- CN 111222491 A
- JP 2023082282 A
- IN 202041039998 A
- CN 101593424 A
- EP 22204301 A1